# EUROPÄISCHE PATENTANMELDUNG

(11) **EP 0 680 986 A2**
(43) Veröffentlichungstag der Anmeldung: **08.11.1995**
(21) Anmeldenummer: 95106249.6
(22) Anmeldetag: 26.04.1995
(51) Int. Cl.: C08G 63/688, C08L 67/00

(54) **Wärmestabile Polyesterformmassen**

(30) Priorität: 06.05.1994 DE 4415995
(71) Anmelder: BASF AKTIENGESELLSCHAFT, D-67056 Ludwigshafen (DE)
(72) Erfinder: Bright, Theresa Anne, Dr., D-68163 Mannheim (DE)

(57) **Zusammenfassung**

Thermoplastische Polyester mit von Diolen und Carbonsäuren abgeleiteten Struktureinheiten, enthaltend 0,01 bis 10 mol-%, bezogen auf die von Carbonsäuren abgeleiteten Struktureinheiten, an Struktureinheiten, die sich von Thiodicarbonsäuren (S1) mit der Formel 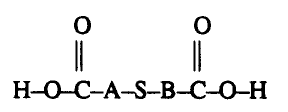
ableiten, bei der A und B substituierte oder unsubstituierte C₁-bis C₁₀-Alkylen- oder C₅- bis C₈-Cycloalkylen-Einheiten oder aus diesen Einheiten zusammengesetzte Einheiten bedeuten.

## Beschreibung

Die Erfindung betrifft thermoplastische Polyester mit von Diolen und Carbonsäuren abgeleiteten Struktureinheiten, enthaltend 0,01 bis 10 mol-%, bezogen auf die von Carbonsäuren abgeleiteten Struktureinheiten, an Struktureinheiten, die sich von Thiodicarbonsäuren (S1) mit der Formel 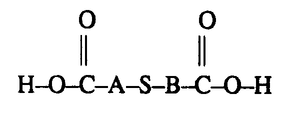
ableiten, bei der A und B substituierte oder unsubstituierte C₁- bis C₁₀-Alkylen- oder C₅- bis C₈-Cycloalkylen-Einheiten oder aus diesen Einheiten zusammengesetzte Einheiten bedeuten.

Außerdem betrifft die Erfindung Verfahren zu deren Herstellung sowie deren Verwendung zur Herstellung von Fasern, Folien oder Formmassen.

Thermoplastische Polyester wie Polyalkylenterephthalate sind allgemein bekannt. Auf Grund ihrer guten mechanischen Eigenschaften, die sie auch in der Wärme weitgehend behalten, strebt man ihre Verwendung als Fasern, Folien und Formkörper auch dort an, wo sie über längere Zeit hinweg erhöhten thermischen und mechanischen Belastungen ausgesetzt sind. In diesen Fallen ist es jedoch erforderlich, die Polyester durch Stabilisatoren zu schützen, da sie bei erhöhten Temperaturen an der Luft abgebaut werden und ihre guten Gebrauchseigenschaften verlieren.

Aus "Thermoplastic Polymer Additives", Hrsg.: John T. Lutz, Verlag: Marcel Dekker, Inc., 1989, sind verschiedene Stabilisatoren für Polyester bekannt. Die Verwendung von Thiodicarbonsäuren und deren Derivaten , z.B. von Dilauryldithiopropionat, wird jedoch nicht beschrieben.

Die CA-A 1 011 030 beschreibt Mischungen von linearen, hochmolekularen Polyester-Harzen und einem Stabilisator-System, bestehend aus einem Thiodicarbonsäureester und einem Phenolderivat. Die Mischungen werden hergestellt, indem man die hochmolekularen linearen Polyester aufschmilzt und mit dem Stabilisatorsystem verknetet. Während sich die Zugfestigkeit von unstabilisierten Polyester-Harzen nach ihrer Alterung in der Wärme stark verschlechtert, verändert sich die der stabilisierten Polyester vergleichsweise wenig.

Der vorliegenden Erfindung lag die Aufgabe zugrunde, neue thermoplastische Polyester bereitzustellen, die nach der Alterung in der Wärme noch gute mechanischen Eigenschaften haben. Demgemäß wurden die eingangs definierten thermoplastischen Polyester gefunden.

Die erfindungsgemäßen thermoplastischen Polyester enthalten Strukturelemente, die sich von Thiodicarbonsäuren (S1) mit der Formel 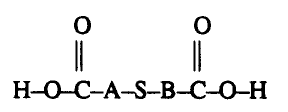
ableiten, wobei A und B substituierte oder unsubstituierte C₁- bis C₁₀-Alkylen- oder C₅- bis C₈-Cycloalkylen-Einheiten oder aus diesen Einheiten zusammengesetzte Einheiten bedeuten. Insgesamt enthalten sowohl A als auch B vorzugsweise 1 bis 15 und besonders bevorzugt 2 bis 6 Kohlenstoffatome. Als Substituenten kommen vor allem inerte Substituenten wie Alkoxy, Alkylthio oder Halogen in Betracht.

Als Ausgangsverbindungen dienen die Thiodicarbonsäuren (S1) selbst oder ihre funktionellen Derivate, wobei vor allem die Thiodipropionsäure, Thiodiessigsäure, Thiodibuttersäure, Thiodivaleriansäure, und Thiodihexansäure sowie deren funktionelle Derivate in Betracht kommen.

Bevorzugte funktionelle Derivate sind die Säurechloride und vor allem die Ester der Formel 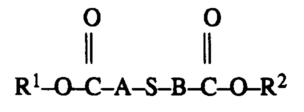
bei der R¹ und R² C₁- bis C₃₀-Kohlenwasserstoffreste bedeuten und ein oder mehrere Wasserstoffatome zusätzlich durch inerte Substituenten wie Alkoxy, Alkylthio oder Halogen ersetzt sein können.

Besonders bevorzugt steht R¹ und R² für C₅- oder C₆-Cycloalkyl, Phenyl oder Naphthyl sowie C₇- bis C₃₀-Aralkyl und vor allem für C₁- bis C₃₀-Alkyl.

Ganz besonders bevorzugt sind Dilaurylthiodipropionat und n-Octadecylthiodipropionat.

Die erfindungsgemäßen thermoplastischen Polyester enthalten weiterhin Einheiten, die sich von sonstigen Dicarbonsäuren (S2) ableiten, die von den Thiodicarbonsäuren (S1) verschieden sind, wobei sich insbesondere C₂-bis C₂₀-Dicarbonsäuren wie Isophthalsäure, Adipinsäure, Azelainsäure, Sebacinsäure, 1,12-Dodecandicarbonsäuren, 1,4-Cyclohexandicarbonsäuren und/oder Terephthalsäure sowie deren funktionelle Derivate eignen. Als funktionelle Derivate kommen z.B. Säurechloride und vor allem Ester, darunter insbesondere die Methylester in Betracht.

Terephthalsäure und Terephthalsäuredimethylester sind die wichtigsten Ausgangsverbindungen. Bevorzugte erfindungsgemäße Polyester enthalten als sich von den Dicarbonsäuren (S2) ableitenden Einheiten, Einheiten, die sich von Terephthalsäure und bis zu 20 mol.-% Einheiten, die sich von anderen Dicarbonsäuren ableiten.

Die in den thermoplastischen Polyestern enthaltenen von Diolen (A) abgeleiteten Struktureinheiten leiten sich bevorzugt von aliphatischen, cycloaliphatischen und aromatischen C₂- bis C₂₀-Diolen wie Ethylenglycol, 1,4-Butandiol, 1,2-Propandiol, 1,3-Propandiol, 1,4-Cyclohexandimethanol, 2,2-Dimethyl-1,3-propandiol, 1,6-Hexandiol, 4,4'-Dihydroxy-1,1'-biphenyl und/oder 1,4-Hydrochinon ab.

Ferner kommen auch von Polyetherdiolen wie Poly(tetrahydrofurandiol) und Polyethylenoxid abgeleitete Struktureinheiten in Betracht.

Unter den Diolen (A) haben Ethylenglycol und 1,4-Butandiol die größte Bedeutung. Als sich von den Diolen (A) ableitende Einheiten enthalten die thermoplastischen Polyester bevorzugt Einheiten, die sich von diesen beiden Diolen und bis zu 20 mol-% Einheiten, die sich von anderen Diolen (A) ableiten.

Weiterhin können in den thermoplastischen Polyestern auch von Hydoxycarbonsäuren (AS) mit bevorzugt 2 bis 20 Kohlenstoffatomen abgeleitete Einheiten enthalten sein. Als Ausgangsverbindungen kommen die Hydroxycarbonsäuren selbst sowie deren funktionelle Derivate wie Lactone in Betracht, z.B. 4-Hydroxybenzoesäure, 6-Hydroxy-2-naphthalinsäure und ε-Caprolacton.

Besonderes wichtige erfindungsgemäße thermoplastische Polyester sind Polybutylenterephthalat und Polyethylenterephthalat, die das von Thiodipropionsäure 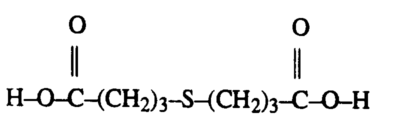
abgeleitete Strukturelement enthalten.

Die Herstellung von thermoplastischen Polyestern ist allgemein bekannt (vgl. Ullmann's Encyclopedia of Industrial Chemistry, Hrsg.: Barbara Elvers et al., Verlag: GDCH Verlagsgesellschaft mbH, 5. Auflage, Band A21, S. 232 bis 251).

Üblicherweise wird die Herstellung von thermoplastischen Polyestern nach einem zweistufigen Verfahren vorgenommen. In der ersten Stufe wird ein Polyester-Präkondensat hergestellt. Hierzu verestert man Dicarbonsäuren mit einem Diol oder estert die Dimethylester von Dicarbonsäuren mit einem Überschuß an Diol um, wobei der gebildete Alkohol oder das Wasser gleichzeitig abdestilliert werden. Das stöchiometrische Verhältnis von Diol zu Dicarbonsäuren oder deren Derivaten beträgt günstigerweise 1,1 : 1 bis 2,0 : 1, bevorzugt 1,2 : 1 bis 1,7: 1, so daß ein Oligo- oder Makrodiol mit einem zahlenmittleren Molekulargewicht von in der Regel 150 bis 2000 gebildet wird.

Im zweiten Schritt erfolgt die Polykondensation des im ersten Schritt gebildeten Präkondensates zu einem thermoplastischen Polyester mit einem zahlenmittleren Molekulargewicht von vorzugsweise mehr als 10000. Während der Polykondensation wird das Präkondensat fortwährend umgeestert, und das Gleichgewicht in Richtung auf die höhermolekularen Produkte verschoben, indem man das gebildete monomere Diol permanent abdestilliert.

Die Vorkondensation und Polykondensation können kontinuierlich oder diskontinuierlich durchgeführt werden und erfolgen bevorzugt unter Bedingungen und in Apparaten, wie sie beispielsweise in der EP-A 0 346 735 beschrieben sind.

Bevorzugt geht man von Dicarbonsäureestern, z.B. Methylestern aus, die mit den Diolen (A) bei einer Temperatur von 160°C bis 230°C unter fortlaufendem Abdestillieren des Methanols umgeestert werden.

Die Polykondensation wird großtechnisch günstigerweise in Rohrreaktoren in der Schmelze bei Temperaturen von 200 bis 350°C und Drücken von 0,5 bis 20 mbar durchgeführt. Unter diesen Bedingungen bildet sich ein zweiphasiges Gemisch aus Polykondensat und dampfförmigen Diolen. Da eine gute Phasendurchmischung die weitere Kondensation unter Bildung höhermolekularer Polyester begunstigt, sind vor allem solche Reaktoren üblich, die mit Einbauten versehen oder mit Füllkörpern, z.B. Raschigringen, gefüllt sind.

Das Molekulargewicht dieser Polykondensate läßt sich anschließend noch weiter durch Kondensation in der festen Phase erhöhen. Hierzu wird festes Polykondensat, bevorzugt in granulierter Form, bei Temperaturen von 5 bis 40°C unterhalb des Schmelzpunktes in einer Inertgasatmosphäre getempert. Hierzu sind in Abhängigkeit vom gewünschten Molekulargewicht gewöhnlich 6 bis 48 h erforderlich.

Bevorzugt wird bereits das Vorpolymerisat aus Diolen (A), Thiocarbonsäuren (S1) und weiteren Dicarbonsäuren (S2) und gegebenenfalls Hydroxycarbonsäuren (AS) oder funktionellen Derivaten von (S1), (S2) und (AS) hergestellt.

Man kann jedoch auch so vorgehen, daß man zunächst ein Präpolymerisat mit einem zahlenmittleren Molekulargewicht von 150 bis 5000 herstellt, das keine von Thiodicarbonsäuren (S1) abgeleiteten Struktureinheiten enthält, und die Thiodicarbonsäure (S1) vor oder während der zweiten Kondensationstufe, der Polykondensation, einkondensiert.

Der Gehalt an von den Thiodicarbonsäuren (S1) abgeleiteten Struktureinheiten, bezogen auf die Gesamtmenge der im Polyester enthaltenen Struktureinheiten, die von den Carbonsäuren (S1) und (S2) abgeleitet sind, beträgt 0,01 bis 10, bevorzugt 0,05 bis 5 und besonders bevorzugt 0,1 bis 4 mol-%.

Die Veresterung der Dicarbonsäuren (S1) und (S2) oder deren funktionellen Derivate mit den Diolen (A) sowie die Polykondensation der Präkondensate läßt sich durch Veresterungs- oder Umesterungskatalysatoren beschleunigen. Gebräuchliche Katalysatoren sind schwach basische Verbindungen wie Amine sowie Metallsalze wie Metalloxide, Alkoxide und Acetate. Besonders wirksam sind Metallsalze von Metallen mit einer Elektronegativität von 1 bis 1,7, z.B. Acetate von Calcium, Magnesium, Zink, Cadmium, Titan, Blei und Cobalt und ferner Titansäureester, z.B. Tetrabutylorthotitanat. Übliche Katalysatorkonzentrationen sind 0,01 bis 0,3 Gew.-%, bezogen auf die Gesamtmenge der Reaktionsmischung.

Die Eigenschaften der erfindungsgemäßen thermoplastischen Polyester lassen sich durch Abmischung mit anderen Polymeren gezielt verändern. In Betracht kommen z.B. Mischungen mit Polyamiden (vgl. DE-A 2 350 852) und Polyurethanen (vgl. DE-A 2 331 826). Zusätze von Polyethylen führen zu einer Verbesserung der Schlagzähigkeit (vgl. DE-A 1 273 193).

Besonders vorteilhaft lassen sich aus den thermoplastischen Polyestern thermoplastische Formmassen herstellen, die
I. 40 bis 100% Gew.-% eines thermoplastischen Polyesters gemäß einem der Ansprüche 1 bis 6,
II. 0 bis 30 Gew-% eines schlagzäh modifizierenden Kautschuks,
III. 0 bis 50 Gew.-% faser- und/oder teilchenförmige Füll- und Verstärkungsstoffe und
IV. 0 bis 20 Gew.-% Flammschutzmittel
enthalten.

Als schlagzäh modifizierende Kautschuke (II) kommen z.B. ASA-Polymerisate, aufgebaut aus verschiedenen Acrylsäureestern und α-Methylstyrol, die mit Styrol-Acrylnitril-Copolymerisaten gepfropft sind (vgl. DE-A 2 758 497), sowie kommerziell erhältliche Ethylen-Propylen- sowie Ethylen-Propylen-Dien-Kautschuke in Betracht.

Beispiele für die faser- und/oder teilchenförmigen Füll- und Verstärkungsstoffe (III) sind z.B. Fasern wie Glasfasern, Kohlenstoffasern, Aramid-Fasern, Kaliumtitanatfasern und faserförmige Silikate wie Wollastonit sowie Teilchen wie Glaskugeln, Quarzmehl, Kaolin, Bornitrid, Calciumcarbonat und Siliciumnitrid.

Besonders bevorzugte Verstärkungstoffe sind Glasfasern. Sie sind kommerziell erhältlich und haben vorzugsweise einen Durchmesser von 6 bis 20 µm. Nach dem Verkneten mit der erfindungsgemäßen Formmasse haben sie im allgemeinen eine mittlere Länge von 0,1 bis 0,5 mm, vorzugsweise von 0,1 bis 0,4 mm. Besonders bevorzugt sind Glasfasern aus E-Glas, einer Glassorte, die weniger als 0,8% Alkalioxid enthält. Zur Erzielung einer besseren Haftung können die Glasfasern mit Organosilanen, Epoxisilanen oder anderen Polymerisatüberzügen beschichtet sein.

Als Flammschutzmittel (IV) kommen alle bekannten Flammschutzmittel wie Polyhalogendiphenyl, Polyhalogendiphenylether, Polyhalogenphthalsäure und ihre Derivate, Polyhalogenoligo-und -polycarbonate, wobei die entsprechenden Bromverbindungen besonders wirksam sind, in Betracht.

Beispiele hierfür sind Polymere des 2,6,2',6'-Tetrabrombisphenols A, der Tetrabromphthalsäure, des 2,6-Dibromphenols und 2,4,6-Tribromphenols und deren Derivate.

Weitere halogenhaltige Flammschutzmittel sind Tetrabrombenzol, Hexachlorbenzol und Hexabrombenzol sowie halogenierte Polystyrole und Polyphenylenether. Auch die in der DE-A-1946926 beschriebenen halogenierten Phthalimide können verwendet werden. Von diesen hat insbesondere N,N'-Ethylenbistetrabromphthalimid Bedeutung erlangt.

Ein bevorzugtes Flammschutzmittel (IV) ist elementarer roter Phosphor sowie Organophosphorverbindungen wie Phosphinate, Phosphonate, Phosphinite, Phosphinoxide, Phosphine, Phosphite oder Phosphate sind ebenfalls bevorzugt. Als Beispiel sei Triphenylphosphinoxid genannt. Dieses kann allein oder vermischt mit Hexabrombenzol oder einem chlorierten Biphenyl oder rotem Phosphor und, wahlweise, Antimonoxid verwendet werden.

Als Flammschutzmittel sind auch solche Verbindungen geeignet, die Phosphor-Stickstoff-Bindungen enthalten, wie Phosphonitrilchlorid, Phosphorsäureesteramide, Phosphorsäureesteramine, Phosphorsäureamide, Phosphonsäureamide, Phosphinsäureamide, Tris(aziridinyl)-phosphinoxid oder Tetrakis(hydroxymethyl)phosphoniumchlorid.

Die genannten Flammschutzmittel sind größtenteils im Handel erhältlich.

Sofern als Flammschutzmittel roter Phosphor eingesetzt wird, enthalten die thermoplastischen Formmassen zusätzlich Stabilisatoren in Mengen von 0,01 bis 5 Gew.-%, bezogen auf die Menge an rotem Phosphor, die die Zersetzung des roten Phosphors in Gegenwart von Luft und Feuchtigkeit verhindern, s.g. Synergisten. Beispiele für diese Synergisten sind Cadmium-, Zink-, Aluminium-, Silber-, Eisen-, Kupfer-, Antimon-, Zinn-, Magnesium-, Mangan-, Vanadium-, Bor-, und Aluminiumverbindungen. Besonders geeignete Verbindungen dieser Metalle sind z.B. Oxide, Carbonate, Oxicarbonate, Hydroxide sowie die Salze organischer oder anorganischer Säuren wie Acetate, Phosphate, Hydrogenphosphate und Sulfate.

Die erfindungsgemäßen Formmassen können weiterhin übliche Zusatzstoffe und Verarbeitungshilfsmittel enthalten.

Übliche Zusatzstoffe sind beispielsweise weitere Stabilisatoren, Gleit- und Entformungsmittel, Färbemittel wie Farbstoffe und Pigmente, pulverförmige Füll- und Verstärkungsmittel und Weichmacher.

Als UV-Stabilisatoren werden ebenfalls die allgemein bei Polymerisaten wirksamen Stoffe in Mengen bis zu 2 Gew.-% bezogen auf das Gesamtgewicht der Mischung, eingesetzt. Beispiele für UV-Stabilisatoren sind verschiedene substituierte Resorcine, Salicylate, Benzotriazole, Benzophenone und Lichtschutzmittel auf der Basis von sterisch gehinderten Aminen (HALS) (vgl. R. Gächter, H. Müller (Hrsg.): "Kunststoff Additiven", Carl Hanser Verlag, München, Wien 1989).

Geeignete Gleit- und Entformungsmittel werden z.B. in Mengen bis zu 5 Gew.-%, bezogen auf das Gesamtgewicht, in die thermoplastische Masse eingearbeitet. Hierzu zählen u.a. Stearinsäuren, Stearylalkohol, Stearinsäureester und -amide.

Ferner können Farbmittel, z.B. organische Farbstoffe wie Nigrosin, Pigmente, z.B. Titandioxid, Cadmiumsulfid, Cadmiumsilfid-Selenid, Phthalocyanine, Ultramarinblau oder Ruß, zugesetzt werden. Auch Keimbildungsmittel zur Beschleunigung Polyester-Kristallisation, wie Talkum, Calciumfluorid, Natriumphenylphosphinat, Aluminiumoxid oder feinteiliges Polytetrafluorethylen können in Mengen von z.B. bis zu 5 Gew.-%, bezogen auf die thermoplastische Masse, angewandt werden.

Weichmacher wie Phthalsäuredioctylester, Phthalsäuredibenzylester, Phthalsäurebutylbenzylester, Kohlenwasserstofföle, N-(n-Butyl)benzolsulfonamid, o- und p-Toluolethylsulfonamid werden vorteilhaft in Mengen bis etwa 20 Gew.-%, bezogen auf die Formmasse, zugesetzt.

Weiterhin kann man zur Verbesserung der Oberflächenqualität auch 0,1 bis 10, vorzugsweise 0,2 bis 5 Gew.-%, bezogen auf das Gesamtgewicht der Formmasse, Silikonöl zusetzen. Es eignen sich prinzipiell die kommerziell erhältlichen Typen von Silikonölen, vorzugsweise solche mit Viskositäten im Bereich von 25 000 bis 250 000, vorzugsweise 50 000 bis 200 000 mPa · s (bei 25°C), besonders bevorzugt ein Silikonöl auf Basis von Dimethylsiloxan mit einer Viskosität von etwa 100 000 mPa s bei 25°C.

Die erfindungsgemäßen thermoplastischen Formmassen können hergestellt werden, indem man die thermoplastischen Polyester und gegebenenfalls die faser- und/oder teilchenförmigen Füll- und Verstärkungsstoffe und die weiteren Hilfs- und Zusatzstoffe in einem Extruder verknetet. Derartige Verfahren sind an sich bekannt und in der Literatur beschrieben. Die Mischtemperaturen im Extruder liegen im allgemeinen im Bereich von 240 bis 300°C.

Die erfindungsgemäßen Formmassen sind zur Herstellung von Formkörpern sowie reißfesten Folien und Fasern geeignet. Sie können besonders vorteilhaft überall dort eingesetzt werden, wo sie erhöhten Temperaturen und mechanischen Beanspruchungen ausgesetzt sind. Anwendungsbeispiele sind Motorteile von PKW-Verbrennungsmotoren.

### Beispiel 1

### Vorkondensation

25,0 kg (129 mol) Dimethylterephthalat, 17,4 kg (185 mol) 1,4-Butandiol, 14,2 g (27 mmol) Dilaurylthiodipropionat (Irganox der Fa. Ciba) und 21,3 g (63 mmol) Tetrabutylorthotitanat wurden auf 120 bis 130°C erhitzt. Das dabei entstehende Methanol wurde kontinuierlich abdestilliert. Nachdem die Bildung von Methanol abgeschlossen war, wurde ein Vakuum von 980 mbar angelegt und ca. 36 g (0,4 mol) 1,4-Butandiol abdestilliert. Bei dem gebildeten Kondensat handelte es sich im wesentlichen um Verbindungen, die aus einer Terephthalsäure- und zwei 1,4-Butandiol-Einheiten aufgebaut sind.

### Polykondensation

Das Vorkondensat wurde 6 Stunden bei 240°C weiterkondensiert, wobei der Druck kontinuierlich von 980 auf 3,7 mbar abgesenkt wurde. Anschließend wurde die Mischung für eine weitere Stunde auf 255°C erhitzt und der Druck auf 1 mbar erniedrigt, wonach man die Mischung abkühlen ließ. Nach dem Erstarren wurde der Polyester 40 h bei einer Temperatur von 210°C getempert.

### Konfektionierung

Der thermoplastische Polyester wurden aufgeschmolzen und mit einem Zweiwellenextruder (ZSK 30 von Werner & Pfleiderer) mit einem Durchsatz von 10 kg/h bei 200 U/min extrudiert und anschließend granuliert. Nach der Extrusion wurden im Spritzguß bei 260°C die für die Bestimmung der Eigenschaften erforderlichen Testkörper hergestellt.

### Beispiel 2

Das Polybutylenterephthalat wurde wie in Beispiel 1 beschrieben hergestellt, jedoch wurde das Dilaurylthiodipropionat erst zu Beginn der Polykondensation zugegeben, d.h. nach dem Abdestillieren des Methanols.

### Beispiel 3 (zum Vergleich)

Das Polybutylenterephthalat wurde wie in Beispiel 1 beschrieben hergestellt, jedoch wurde das Dilaurylthiodipropionat erst während der Konfektionierung zugegeben.

### Beipsiel 4 (zum Vergleich)

Das Polybutylenterephthalat wurde wie in Beispiel 1 beschrieben hergestellt, jedoch wurde kein Dilaurylthiodipropionat zugegeben. Die Ergebnisse der Prüfungen sind in der Tabelle zusammengestellt.

Die Prüfkörper wurden bei 140°C an der in der Tabelle angegeben Anzahl von Tagen gealtert.

Die Viskositätszahl (VZ) wurde nach DIN 53726, Teil 2, mit einer 0,5 gew.-%igen Lösung in Phenol/o-Dichlorbenzol (Gewichtsverhältnis 1:1) bei 23°C in einem Ubbelohde-Viskosimeter bestimmt.

Die Schlagzähigkeit aₙ wurde nach DIN 53453 bei 23°C bestimmt. Die Schlagarbeit wurde bei der Schlagzähigkeits-Prüfung aₙ ermittelt, indem jeweils 10 ungekerbte Normkleinstäbe der Abmessung 50 mm x 6 mm x 4 mm in einem Pendelschlagwerk nach Charpy geschlagen wurden. Die maximale Schlagbeanspruchung betrug 160 kJ/m². In der Tabelle sind neben dem prozentualen Anteil der gebrochenen Proben die mittlere Schlagzähigkeit der gebrochenen Proben angegeben.

Nach 50tägiger Alterung der Proben bei 140°C wurde ihre Farbe subjektiv-visuell beurteilt.

**Tabelle**

| Beispiel | 1 | 2 | 3(V) | 4(V) |
|---|---|---|---|---|
| VZ [ml/g] | 135 | 124 | 125 | 125 |

| 0d Alterung: | | | | |
|---|---|---|---|---|
| Bruch [%] | 0 | 0 | 0 | 0 |
| aₙ [kJ/m²} | - | - | - | - |

| 10d Alterung: | | | | |
|---|---|---|---|---|
| Bruch [%] | 0 | 0 | 60 | 70 |
| aₙ [kJ/m²} | - | - | 82 | 62 |

| 20d Alterung: | | | | |
|---|---|---|---|---|
| Bruch [%] | 10 | 10 | 40 | 50 |
| aₙ [kJ/m²} | 149 | 122 | 123 | 106 |

| 30d Alterung: | | | | |
|---|---|---|---|---|
| Bruch [%] | 20 | 50 | 100 | 90 |
| aₙ [kJ/m²} | 141 | 122 | 35 | 45 |

| 40d Alterung: | | | | |
|---|---|---|---|---|
| Bruch [%] | 0 | 90 | 100 | 100 |
| aₙ [kJ/m²} | - | 35 | 24 | 25 |

| 50d Alterung: | | | | |
|---|---|---|---|---|
| Bruch [%] | 10 | 100 | 100 | 100 |
| aₙ [kJ/m²}5 | 154 | 25 | 21 | 19 |
| Farbe | hellgelb | gelb | gelb | hellgelb |

## Patentansprüche

1. Thermoplastische Polyester mit von Diolen und Carbonsäuren abgeleiteten Struktureinheiten, enthaltend 0,01 bis 10 mol-%, bezogen auf die von Carbonsäuren abgeleiteten Struktureinheiten, an Struktureinheiten, die sich von Thiodicarbonsäuren (S1) mit der Formel 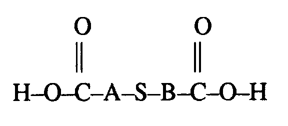 ableiten, bei der A und B substituierte oder unsubstituierte C₁- bis C₁₀-Alkylen- oder C₅- bis C₈-Cycloalkylen-Einheiten oder aus diesen Einheiten zusammengesetzte Einheiten bedeuten.

2. Thermoplastischer Polyester, erhältlich durch
A. Polykondensation von
a1) Thiodicarbonsäuren (S1) der Formel 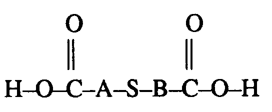 und/oder funktionellen Derivaten derselben,
a2) sonstigen, von den Thiodicarbonsäuren (S1) verschiedenen Dicarbonsäuren (S2) und/oder einem ihrer funktionellen Derivate,
a3) Diolen (A) und gegebenenfalls
a4) Hydroxycarbonsäuren (AS) und/oder ihren Derivaten
oder durch
B) Polykondensation von
b1) Thiodicarbonsäuren (S1) und/oder ihren funktionellen Derivaten und
b2) Präkondensaten mit einem zahlenmittleren Molekulargewicht von 150 bis 5000, aufgebaut aus
b2.1) Diolen (A),
b2.2) Dicarbonsäuren (S2) und gegebenenfalls
b2.3) Hydroxycarbonsäuren (AS),
wobei der molare Anteil der Thiodicarbonsäuren (S1) bezogen auf die Summe der Aufbaukomponenten (S1), (S2) und (AS), 0,01 bis 10 mol-% beträgt.

3. Thermoplastische Polyester nach einem der Ansprüche 1 bis 2, wobei als sich von den Dicarbonsäuren (S2) ableitende Einheiten, Einheiten, die sich von Terephthalsäure und bis zu 20 mol-% Einheiten, die sich von anderen Dicarbonsäuren ableiten, enthalten sind.

4. Thermoplastische Polyester nach einem der Ansprüche 1 bis 3, wobei als sich von den Diolen (A) ableitende Einheiten, Einheiten, die sich von 1,4- Butandiol oder Ethylenglycol und bis zu 20 mol-% Einheiten, die sich von anderen Diolen ableiten, enthalten sind.

5. Thermoplastische Polyester nach einem der Ansprüche 1 bis 4, wobei als sich von den Thiodicarbonsäuren (S1) ableitende Einheiten, Einheiten, die sich von der Thiodicarbonsäure mit der Formel 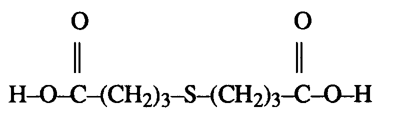 ableiten, enthalten sind.

6. Verfahren zur Herstellung thermoplastischer Polyester durch
A. Polykondensation von
a1) Thiodicarbonsäuren (S1) der Formel 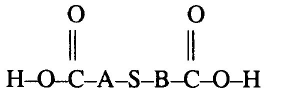 und/oder funktionellen Derivaten derselben,
a2) sonstigen, von den Thiodicarbonsäuren (S1) verschiedenen Dicarbonsäuren (S2) und/oder ihren funktionellen Derivaten,
a3) Diolen (A) und gegebenenfalls
a4) Hydroxycarbonsäuren (AS) und/oder ihren Derivaten
oder durch
B) Polykondensation von
b1) Thiodicarbonsäuren (S1) und/oder ihren funktionellen Derivaten und
b2) Präkondensaten mit einem zahlenmittleren Molekulargewicht von 150 bis 5000, aufgebaut aus
b2.1) Diolen (A),
b2.2) Dicarbonsäuren (S2) und gegebenenfalls
b2.3) Hydroxycarbonsäuren (AS),
wobei der molare Anteil der Thiodicarbonsäuren (S1), bezogen auf die Summe der Aufbaukomponenten (S1), (S2) und (AS), 0,01 bis 10 mol-% beträgt.

7. Thermoplastische Formmassen, enthaltend
I. 40 bis 100% Gew.-% eines thermoplastischen Polyesters gemäß einem der Ansprüche 1 bis 6,
II. 0 bis 30 Gew.-% eines schlagzäh modifizierenden Kautschuks,
III. 0 bis 50 Gew.-/% faser- und/oder teilchenförmige Füll- und Verstärkungsstoffe und
IV. 0 bis 20 Gew.-% Flammschutzmittel

8. Verwendung der thermoplastischen Formmassen gemäß Anspruch 7 zur Herstellung von Formkörpern, Folien und Fasern.

9. Formkörper, Folien und Fasern aus den thermoplastischen Formmassen gemäß Anspruch 7.
